# EUROPÄISCHE PATENTANMELDUNG

(11) **EP 2 165 797 A1**
(43) Veröffentlichungstag der Anmeldung: **24.03.2010**
(21) Anmeldenummer: 09170580.6
(22) Anmeldetag: 17.09.2009
(51) Int. Cl.: B23P 9/02, B24B 39/06, C21D 7/08

(54) **Bearbeitungsvorrichtung für gelötete Werkstücke**

(30) Priorität: 17.09.2008 DE 102008048241
(71) Anmelder: Volkmann Elektromaschinenbau GmbH, 14550 Gross Kreutz (DE)
(72) Erfinder:
(74) Vertreter: Eisenführ, Speiser & Partner

(57) **Zusammenfassung**

Die Erfindung betrifft eine Bearbeitungsvorrichtung (10) zum Bearbeiten hart gelöteter Werkstücke und insbesondere zum Glätten von Lötstellen. Die Bearbeitungsvorrichtung besitzt eine Werkstückauflage (12) und einen mit der Werkstückauflage (12) verbundenen Niederhalter (14). An diesem ist eine Walzvorrichtung (22,24,26,28) mit einer Walze (28) derart beweglich befestigt, dass ein Werkstück (32) mit zu glättender Lötstelle zwischen Niederhalter (14) und Walzvorrichtung (22,24,26,28) anzuordnen ist und die Walze (28) über das Werkstück (32) und dessen zu glättende Lötstelle zu bewegen ist, und dabei übt die Walze (28) auf das Werkstück (32) eine in Richtung des Werkstücks (32) gerichtete Druckkraft aus, die eine Größe besitzt, die nötig ist, um das Werkstück (32) im Bereich der Lötstelle plastisch zu verformen.

## Beschreibung

Die Erfindung betrifft eine Bearbeitungsvorrichtung für gelötete Werkstücke, insbesondere zum Glätten von Lötstellen.

Für große Generatoren, beispielsweise zur Verwendung in Kraftwerken, werden Kupferspulen benötigt, die aus mehreren Kupferteilen bestehen, welche durch Hartlöten miteinander verbunden sind. An den Lötstellen tritt häufig das Lot über die gewünschte Außenkontur des Werkstücks hervor. Um diesen Mangel zu beheben, ist es beispielsweise bekannt, das Werkstück, insbesondere dessen Lötstellen, spanabhebend, beispielsweise durch Schleifen, zu bearbeiten. Die dabei entstehenden Späne stellen insofern ein Problem dar, als sie in einem weiteren Arbeitsgang entfernt werden müssen.

Alternativ ist es bekannt, die Lötstellen eines solchen Werkstücks mittels Pressen einzuebnen. Hierbei stellen die erforderlichen großen Kräfte und ein einseitiges Auffedern der Presseinrichtung ein Problem dar.

Der Erfindung liegt die Aufgabe zugrunde, eine alternative Bearbeitungsvorrichtung zum Glätten von Lötstellen, insbesondere hart gelöteter Werkstücke anzugeben.

Erfindungsgemäß wird diese Aufgabe durch eine Bearbeitungsvorrichtung der eingangs genannten Art gelöst, welche eine Werkstückauflage aus hartem Material und einem mit der Werkstückauflage verbundenen Niederhalter aufweist. An dem Niederhalter ist eine Walzvorrichtung mit einer Walze derart beweglich befestigt, dass ein Werkstück mit zu glättender Lötstelle zwischen Werkstückauflage und Walzvorrichtung anzuordnen ist und die Walze über das Werkstück und insbesondere dessen zu glättende Lötstelle zu bewegen ist. Dabei übt die Walze auf das Werkstück und die Lötstelle eine in Richtung der Werkstückauflage gerichtete Druckkraft aus, die eine Größe besitzt, bei der über eine vorgegebene Kontur hervorstehende Vorsprünge des Werkstücks durch plastische Verformung des gelöteten Werkstücks eingeebnet werden.

Die Erfindung beruht auf der Erkenntnis, dass die zur plastischen Verformung des Werkstücks erforderliche Druckkraft mit Hilfe einer Walze leichter in das Werkstück anzubringen ist, als bei bekannten Pressvorrichtungen, da die Walze in einem jeweiligen Augenblick immer nur einen Teil des zu glättenden Abschnitts des Werkstücks verformt. Die Berührungsfläche zwischen Walze und Werkstück ist wesentlich geringer, als die bei der aus dem Stand der Technik bekannten Presse. Dadurch ergibt sich bei insgesamt geringerem Krafteinsatz eine höhere, auf das Werkstück einwirkende Druckkraft. Eine Bearbeitung des gesamten, zu bearbeitenden Werkstückabschnitts wird dadurch ermöglicht, dass die Walze relativ zur Werkstückauflage und damit auch relativ zum Werkstück entlang der Werkstückauflage beweglich angeordnet ist.

Vorzugsweise ist die Walze hierzu an einem Schlitten der Walzvorrichtung befestigt, der außerdem wenigstens eine Rolle aufweist, die durch eine Führungsschiene am Niederhalter geführt ist. Im Betrieb kann der Schlitten entlang der Führungsschiene bewegt werden. Dabei rollt die Rolle an der Führungsschiene ab und die Walze bewegt sich mit dem Schlitten zusammen über die zu glättende Oberfläche des Werkstücks.

Der Schlitten ist vorzugsweise mit einem Vorschubantrieb zum Bewegen des Schlittens entlang der Führungsschiene verbunden. Dieser Vorschubantrieb ist vorzugsweise ein hydraulischer Antrieb, also beispielsweise ein Hydraulikzylinder, der den Schlitten entlang der Führungsschiene bewegt. Vorzugsweise übt der Hydraulikantrieb eine Zugkraft auf den Schlitten aus, alternativ kann jedoch auch ein Druckantrieb vorgesehen sein.

Alternativ kann der Vorschubantrieb auch ein elektrischer Antrieb sein.

Die Walze zum Glätten des Werkstücks ist vorzugsweise so ausgebildet, dass sie an ihrer Umfangsfläche ein Profil aufweist, das der gewünschten Querschnittskontur des Werkstücks entspricht. Statt eine reine zylindermantelförmige Außenkontur zu besitzen, kann die Walze in ihrer Umfangsfläche auch Vertiefungen oder Vorsprünge aufweisen, die gewünschten Vorsprüngen bzw. Vertiefungen des Werkstücks entsprechen.

Die Schiene zum Führen des Schlittens ist vorzugsweise so angeordnet und geformt, dass sie den Schlitten und damit die Walze entlang einer gewünschten Längskontur des Werkstücks führt. Die Führungsschiene kann also beispielsweise auch leicht gebogen sein, auch wenn sie in der Regel gerade sein wird.

Weiterhin ist die Führungsschiene vorzugsweise über einen Andruckantrieb mit der Werkstückauflage verbunden, der so angeordnet und ausgebildet ist, dass er eine in Richtung der Werkstückauflage quer zur Rotationsachse der Walze wirkende Anpresskraft ausübt. Diese Anpresskraft wird über die Führungsschiene auf den Schlitten und damit auf die Walze übertragen und korrespondiert mit der zur plastischen Verformung des Werkstücks erforderlichen Druckkraft, die von der Walze auf das Werkstück ausgeübt wird. Diese Druckkraft ist somit mittels des Andruckantriebs einstellbar und/oder steuerbar.

Vorzugsweise ist der Andruckantrieb mit einem hydraulisch angetriebenen Stempel verbunden. Damit kann auch die Druckkraft im Ursprung hydraulisch erzeugt werden. Hydraulikantriebe lassen sich leicht steuern und können große Kräfte erzeugen.

Vorzugsweise wirkt der Andruckantrieb auch auf den Niederhalter und über diesen, die Schiene zum Führen des Schlittens und den Schlitten selbst auch auf die Walze. Der Niederhalter ist so ausgeführt, dass er ein Werkstück zwischen wenigstens einer Halterfläche des Niederhalters und der Werkstückauflage so festhält, dass das Werkstück bei der Bearbeitung nicht verrutschen kann. Bei einem Reibungskoeffizient >0,1 für die Haftreibung zwischen Kupfer und Stahl sollte die Anpresskraft ca. 10 Mal so groß sein wie die vom Vorschubantrieb bewirkte Bewegungskraft, damit das Werkstück sicher gehalten wird.

Außerdem ist die Walze zur Haltefläche des Niederhalter so eingestellt, dass sie gemäß den Erfordernissen des Werkstücks vor oder auch zurücksteht. Auf diese Weise wird die Lötstelle immer auf dasselbe Maß gepresst, unabhängig von der Werkstückdicke.

Vorzugsweise ist auch die Werkstückauflage konturiert und besitzt eine auf ihrer zur Walze gewandten Seite eine Kontur, die der gewünschten Kontur des Werkstücks entspricht.

Die Werkstückauflage und die Walze bestehen aus einem harten Material, beispielsweise gehärtetem Stahl, das wesentlich härter ist als das Material des Werkstücks.

Weitere bevorzugte Ausführungsvarianten der Bearbeitungsvorrichtung ergeben sich durch sinnvolle Kombinationen der bereits besprochenen Merkmale sowie aus der nachfolgenden Beschreibung eines Ausführungsbeispiels.

Darüber hinaus besteht die Erfindung in einem Verfahren zum Bearbeiten von gelöteten Werkstücken, welches zum Inhalt hat, dass für die Bearbeitung hart gelöteter Werkstücke insbesondere zum Nachbearbeiten der Lötstellen eine Bearbeitungsvorrichtung der zuvor beschriebenen Art verwendet wird, bei der das zu bearbeitende Werkstück auf einer Werkstückauflage aufliegt und eine Walze über den zu glättenden Bereich des Werkstücks gerollt wird, wobei die Walze eine zum plastischen Verformen des Werkstücks erforderliche Druckkraft auf das Werkstück ausübt.

Die Konstruktion der Bearbeitungsvorrichtung in Verbindung mit der vergleichsweise geringen Anpresskraft führt dazu, dass die Bearbeitungsvorrichtung insgesamt relativ wenig auffedert. Außerdem wird ein geringfügiges Auffedern dadurch ausgeglichen, dass der Schlitten mittels des Stempels nachgesetzt wird.

Die Erfindung soll nun anhand eines Ausführungsbeispiels mit Bezug auf die Figuren näher erläutert werden. Von diesen zeigen:
- Fig. 1:: eine Ansicht einer erfindungsgemäßen Bearbeitungsvorrichtung in Richtung der Bewegungsrichtung einer Walze;
- Fig. 2:: einen Längsschnitt durch die Bearbeitungsvorrichtung aus Fig. 1 entlang der Bewegungsrichtung der Walze.

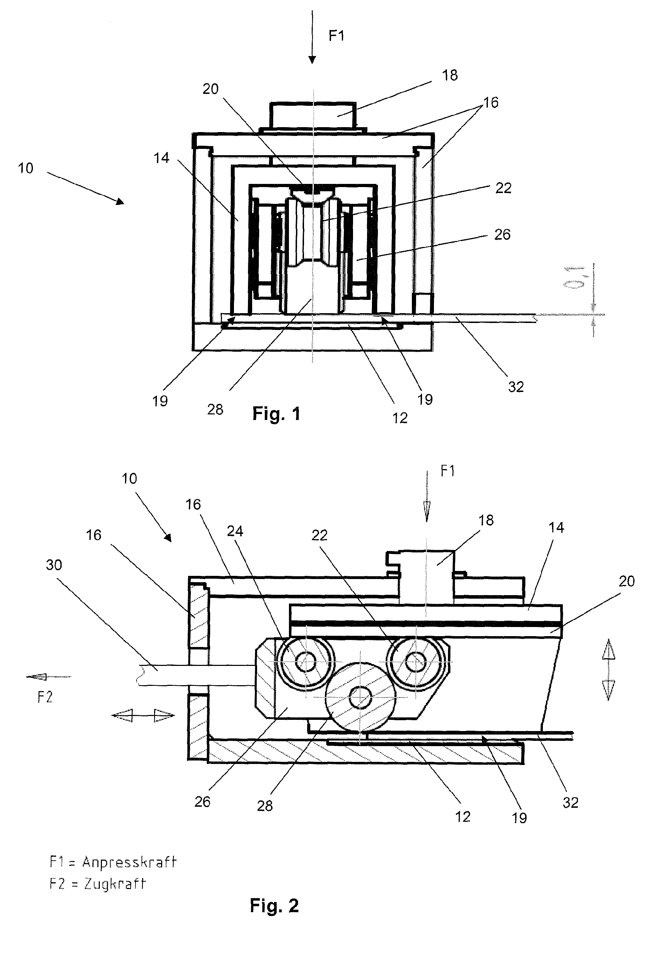

Die in Fig. 1 abgebildete, erfindungsgemäße Bearbeitungsvorrichtung 10 besitzt eine Werkstückauflage 12 und einen Niederhalter 14, der über einen Rahmen 16 indirekt mit der Werkstückauflage 12 verbunden ist. Dabei ist der Rahmen 16 unmittelbar mit der Werkstückauflage 12 verbunden, während der Niederhalter 14 über einen Andruckstempel 18 mit dem Rahmen 16 verbunden ist. Mit Hilfe des Andruckstempels 18 kann eine senkrecht zur Werkstückauflage 12 ausgerichtete Anpresskraft F1 auf den Niederhalter 14 aufgebracht werden. Der Andruckstempel 18 ist Teil eines Andruckantriebs, der einen hydraulischen, pneumatischen, elektrischen oder auch manuellen Antrieb z.B. in Form einer Kniehebelpresse aufweisen kann.

Die Werkstückauflage 12 ist ein in den Unterbau der Bearbeitungsvorrichtung 10 eingesetztes hartes Metallstück und kann ggf. ausgewechselt werden.

Der Niederhalter 14 wird von einem U-Profil gebildet, welches nach unten zur Werkstückauflage 12 hin geöffnet ist und an dessen geschlossener Seite der Stempel 18 angreift. Die freien Endflächen 19 der U-Schenkel des Niederhalters 14 dienen als Halteflächen, die im Betrieb auf ein Werkstück 32 einwirken und das Werkstück 32 gegen die Werkstückauflage 12 pressen. Die vom Andruckstempel 18 bewirkte Kraft ist dabei so bemessen, dass der Niederhalter 14 das Werkstück so festhält, dass das Werkstück bei der Bearbeitung nicht verrutschen kann. Bei einem Reibungskoeffizienten >0,1 für die Haftreibung zwischen Kupfer und Stahl, sollte die Anpresskraft F1 ca. 10 Mal so groß sein, wie eine Bewegungskraft F2, damit das Werkstück sicher gehalten wird.

Auf der Innenseite des U-Profils des Niederhalters 14 ist eine Führungsschiene 20 angeordnet, auf der zwei Rollen 22 und 24 abrollen. Diese beiden Rollen 22 und 24 sind Teil eines Schlittens 26, an dessen zur Werkstückauflage 12 hingewandten Seite eine Walze 28 mittig zwischen den Rollen 22 und 24 angeordnet ist. Die Walze 28 ist zur Haltefläche 19 des Niederhalters 14 so eingestellt, dass sie gemäß den Erfordernissen des Werkstücks vor oder auch zurück steht. Auf diese Weise wird eine zu glättende Lötstelle immer auf dasselbe Maß gepresst, unabhängig von der Dicke des jeweiligen Werkstücks.

Anstelle einer Rollenführung der dargestellten Art mit ihren Rollen 22 und 24 kann auch eine einfache Gleitführung oder eine mit Hilfe von Axialkugellagern oder Rollenschienen realisierte Rollenführung vorgesehen sein.

Im dargestellten Ausführungsbeispiel ist der Schlitten 26 durch die beiden Rollen 22 und 24 entlang der Führungsschiene 20 beweglich. Um den Schlitten 26 anzutreiben, ist am Schlitten 26 eine Zugstange 30 angebracht, die mit einem Vorschubantrieb, vorzugsweise einem Hydraulikantrieb verbunden ist und eine Zugkraft F2 auf den Schlitten 26 ausübt. Die Zugkraft (Bewegungskraft) F2 ist dabei parallel zur Längsrichtung der Führungsschiene 20 ausgerichtet. Auf diese Weise kann der Schlitten 26, wie durch den Doppelpfeil in Fig. 2 angedeutet, in Bezug auf die Abbildung nach links oder rechts hin und her bewegt werden.

Eine solche Bewegung bewirkt, dass die Walze 28 auf einem zwischen Niederhalter 14 und Werkstückauflage 12 eingespannten Werkstück 32 abrollt.

Im Betrieb der Bearbeitungsvorrichtung 10 wird somit ein Werkstück 32 auf die Werkstückauflage 12 aufgelegt und anschließend durch den Niederhalter 14 festgehalten. Dazu wird der Niederhalter mit Hilfe des Stempels 18 in Richtung des Werkstücks 32 und der Werkstückauflage 12 gedrückt. Die von dem Stempel 18 übertragene Anpresskraft F1 wird einerseits über das U-Profil des Niederhalters 14, und die Führungsschiene 20, die beiden Rollen 22 und 24 des Schlittens 26 und den Schlitten 26 selbst auf die Walze 28 übertragen. Außerdem wird die von dem Stempel 18 übertragene Anpresskraft F1 auch über das U-Profil des Niederhalters 14 direkt auf die freien Endflächen 19 des U-Profils als Halteflächen des Niederhalters 14 auf das Werkstück 32 übertragen, um das Werkstück zwischen diesen Halteflächen 19 und der Werkstückauflage 12 sicher festzuhalten.

Die Anpresskraft F1 bewirkt somit im doppelten Sinne eine entsprechende Druckkraft auf das Werkstück 32.

Mit Hilfe der Zugstange 30 kann nun auf den Schlitten 26 eine Zugkraft F2 ausgeübt werden, die bewirkt, dass der Schlitten 26 und damit auch die Walze 28 entlang der Führungsschiene 20 und somit längs über das Werkstück 32 hinweg bewegt wird. Auf diese Weise kann das Werkstück 32 auf einer Fläche eingeebnet werden, die der Breite der Walze 28 entspricht sowie der Länge des Verfahrwegs des Schlittens 26 entlang der Führungsschiene 20. Der dabei von der Walze 28 auf das Werkstück 32 ausgeübte Druck ist wesentlich größer, als wenn die gesamte Anpresskraft F1 auf die gesamte, zu bearbeitende Fläche, also Breite der Walze 28 mal Fahrweg des Schlittens 26, gleichmäßig verteilt würde. Umgekehrt bedeutet dies, dass die Anpresskraft F1 wesentlich kleiner sein kann, als der zur plastischen Verformung des Werkstücks 32 erforderliche Druck.

## Patentansprüche

1. Bearbeitungsvorrichtung (10) zum Glätten von Lötstellen, **dadurch gekennzeichnet, dass** die Bearbeitungsvorrichtung
- eine Werkstückauflage (12) und
- einen mit der Werkstückauflage (12) verbundenen Niederhalter (14) aufweist, an dem
- eine Walzvorrichtung (22, 24, 26, 28) mit einer Walze (28) beweglich derart befestigt ist, dass ein Werkstück (32) mit zu glättender Lötstelle zwischen Werkstückauflage (12) und Walzvorrichtung anzuordnen ist und die Walze (28) über das Werkstück und dessen zu glättende Lötstelle zu bewegen ist,
- wobei die Walze (28) im Betrieb der Bearbeitungsvorrichtung auf ein Werkstück und dessen Lötstelle eine in Richtung der Werkstückauflage gerichtete Druckkraft einer Größe ausübt, die bei über eine vorgegebene Kontur hervorstehenden Vorsprüngen des Werkstücks, insbesondere im Bereich der Lötstelle zu einer plastischen Verformung eines gelöteten Werkstücks führt.

2. Bearbeitungsvorrichtung nach Anspruch 1, **dadurch gekennzeichnet, dass** die Walzvorrichtung einen Schlitten (26) mit wenigstens einer Rolle (22, 24) aufweist, die durch eine Führungsschiene (20) am Niederhalter (14) geführt ist, wobei die Walze (28) an dem Schlitten (26) befestigt und mit diesem zusammen entlang der Führungsschiene (20) beweglich ist.

3. Bearbeitungsvorrichtung nach Anspruch 2, **dadurch gekennzeichnet, dass** der Schlitten (26) mit einem Vorschubantrieb (30) zum Bewegen des Schlittens (26) entlang der Führungsschiene (20) verbunden ist.

4. Bearbeitungsvorrichtung nach Anspruch 3, **dadurch gekennzeichnet, dass** der Vorschubantrieb ein hydraulischer Antrieb ist, der auf den Schlitten (26) eine Zugkraft (F2) entlang der Führungsschiene (20) ausübt.

5. Bearbeitungsvorrichtung nach einem der Ansprüche 1 bis 4, **dadurch gekennzeichnet, dass** die Walze (28) an ihrer Umfangsfläche ein Profil aufweist, dass der gewünschten Querschnittskontur eines Werkstücks entspricht.

6. Bearbeitungsvorrichtung nach einem der Ansprüche 2 bis 5, **dadurch gekennzeichnet, dass** die Führungsschiene (20) derart angeordnet und geformt ist, dass sie den Schlitten (26) und damit die Walze (28) entlang einer gewünschten Längskontur eines Werkstücks führt.

7. Bearbeitungsvorrichtung nach einem der Ansprüche 2 bis 6, **dadurch gekennzeichnet, dass** die Führungsschiene (20) über einen Andruckantrieb (18) mit der Werkstückauflage (12) verbunden ist, der angeordnet und ausgebildet ist, eine in Richtung der Werkstückauflage (12) quer zur Rotationsachse der Walze (28) wirkende Anpresskraft auszuüben.

8. Bearbeitungsvorrichtung nach Anspruch 7, **dadurch gekennzeichnet, dass** der Andruckantrieb einen hydraulisch angetriebenen Stempel (18) aufweist.

9. Bearbeitungsvorrichtung nach einem der Ansprüche 2 bis 6, **dadurch gekennzeichnet, dass** die Werkstückauflage (12) auf ihrer zur Walze (28) gewandten Seite eine Kontur besitzt, die der gewünschten Kontur eines Werkstücks entspricht.

10. Verwendung einer Bearbeitungsvorrichtung nach einem der Ansprüche 1 bis 9 zur Glättung von Lötstellen eines hart gelöteten Werkstücks.
